# EUROPÄISCHE PATENTSCHRIFT

(11) **EP 1 521 696 B1**
(45) Veröffentlichungstag und Bekanntmachung des Hinweises auf die Patenterteilung: **27.12.2006**
(21) Anmeldenummer: 03762667.8
(22) Anmeldetag: 09.07.2003
(51) Int. Cl.: B60T 8/40, B60T 8/44

(54) **BY-WIRE-BREMSBETAETIGUNGSVORRICHTUNG**
BRAKE BY-WIRE ACTUATOR
DISPOSITIF D'ACTIONNEMENT DE FREIN A COMMANDE ELECTRIQUE

(30) Priorität: 09.07.2002 DE 10230865; 23.05.2003 DE 10323825; 28.05.2003 DE 10324503
(43) Veröffentlichungstag der Anmeldung: 13.04.2005
(60) Teilanmeldung: 06121028.2
(73) Patentinhaber: Continental Teves AG & Co. oHG, 60488 Frankfurt (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); RITTER, Wolfgang, 61440 Oberursel/Ts. (DE); KLIMES, Milan, 55270 Zornheim (DE); QUEISSER, Torsten, 60439 Frankfurt (DE); ECKERT, Alfred, 55129 Mainz-Hechtsheim (DE); ALBRICH VON ALBRICHSFELD,Christian, 64283 Darmstadt (DE)
(86) Internationale Anmeldenummer: PCT/EP2003/007406
(87) Internationale Veröffentlichungsnummer: WO 2004/005095

(56) Entgegenhaltungen:
- EP-A- 0 754 607
- DE-A- 2 327 508
- DE-A- 4 029 793
- DE-A- 19 632 035
- DE-A- 19 750 977
- DE-C- 4 234 041
- DE-C- 19 543 698
- US-A- 4 395 883
- US-A- 5 927 827
- PATENT ABSTRACTS OF JAPAN vol. 2000, no. 13, 5. Februar 2001 (2001-02-05) -& JP 2000 280872 A (TOKICO LTD), 10. Oktober 2000 (2000-10-10)

## Beschreibung

Die Erfindung betrifft eine By-Wire-Bremsbetätigungsvorrichtung nach dem Oberbegriff des Anspruchs 1.

Eine By-wire-Bremsbetätigungsvorrichtung wurde bereits im Rahmen einer elektrohydraulischen Bremsanlage (EHB) vorgeschlagen. Die Vorrichtung beruht auf einer hydraulischen Entkopplung des Bremspedals von den hydraulischen Rückwirkungskräften des Bremssystems, indem elektromagnetische Trennventile vorgesehen sind, welche einen Hauptbremszylinder hydraulisch von dem Bremssystem abtrennen. Der Bremsdruck in den Radbremsen wird auf elektronischem Wege (by-wire) geregelt, indem das Signal des Betätigungssensors, welcher beispielsweise als Pedalwegsensor ausgelegt ist, einer elektronischen Steuereinheit und nach Datenverarbeitung einer elektrohydraulisch arbeitenden Hydraulikeinheit (HCU) mit Elektromagnetventilen zugeführt wird, so daß in Abhängigkeit von dem Ausgangssignal der HCU unter Verwendung der Druckquelle einzelne oder alle Radbremsen mit einem geeigneten Bremsdruck beaufschlagt werden. Der Fahrzeugführer spürt dagegen lediglich die Rückwirkungskräfte eines Simulators.

Damit das Bremssystem auch in einem defektbedingten, stromlosen Zustand betätigbar ist, bedient man sich einer sogenannten hydraulischen - da stromlosen - Rückfallebene, innerhalb derer die Bremsbetätigung unter Verwendung eines aufwändigen Sicherheitskonzeptes gewährleistet wird. Dabei ermöglichen vielfältige Sensorsignalauswertungsvorgänge Teilabschaltungen bestimmter Funktionen wie Bremsassistent, Fahrstabilitätsregelung (ESP) sowie schließlich eine Betätigung infolge Muskelkraft, indem der by-wire-Modus mit Simulatorfunktion abgeschaltet wird, und ein noch vorgesehener Tandemhauptbremszylinder hydraulisch mit den Radbremsen verbunden wird. Eine derartige Gestaltung der Rückfallebenen wird als unverzichtbar angesehen.

Derzeitige Entwicklungen der Fahrzeugtechnik ziehen jedoch auch regenerative Bremsmethoden in Erwägung, welche eine Umwandlung der zu verringernden kinetischen Fahrzeugenergie in elektrische Energie ermöglichen, indem ein Generator aufgeschaltet wird, welcher ein Bordnetz speist. Dies kann beispielsweise mit einer sogenannten Starter-Generator-Kombination (ISAD), mit Radnabenantrieben oder auf anderem Wege realisiert werden, so daß der Generatorbetrieb zumindest in einem gewissen Umfang Bremsfunktionen übernimmt. Diese Konstellation erfordert ein weiter entwickeltes Sicherheitskonzept für die Rückfallebene, denn beispielsweise selbst bei einer Undichtigkeit in Radbremskreisen oder einem Teilausfall von elektrischen Funktionen der elektrohydraulischen Fahrzeugbremsanlage können regenerative Bremsfunktionen, wie insbesondere der Generatorbetrieb, verfügbar sein.

Konventionelle Bremsanlagen werden nun so ausgelegt, daß kein oder kein nennenswerter Leerweg auftritt. Dadurch wird dem Fahrzeugführer das Gefühl gegeben, eine direkte und unmittelbare sowie gut dosierbare Bremswirkung zu erzielen, was generell begrüßt wird. Dieses Verhalten ist bei by-wire-Bremsanlagen für den by-wire-Modus leicht machbar, nicht jedoch bei einem Wechsel in einen mechanischen Durchgriff innerhalb einer sogenannten mechanischen oder hydraulischen Rückfallebene.

Aus der DE 19 750 977 A1 ist eine gattungsgemäße By-Wire-Bremsbetätigungsvorrichtung bekannt bei welcher als nachteilig ange-sehen wird, dass Fehlfunktionen in der Bremsanlage nicht erkannt werden können.

Es ist eine Aufgabe der vorliegenden Erfindung, eine dahingehend verbesserte by-wire Betätigungsvorrichtung vorzuschlagen, welche zur Implementation in vielfältige, insbesondere auch regenerative Bremssysteme geeignet ist, und im by-wire-Modus wie auch in der mechanisch/hydraulischen Rückfallebene gute Betätigungseigenschaften zeigt.

Die Aufgabe wird erfindungsgemäß durch die Merkmale des kennzeichnenden Teils des Anspruch 1 gelöst.

Die Erfindung ermöglicht bei uneingeschränkter Funktionalität eine überraschend einfache by-wire-Bremsbetätigungsvorrichtung. Bis zum Erreichen der hydraulisch/mechanischen Rückfallebene ist lediglich der Leerweg zu überwinden, bevor ein Bremsdruckaufbau in den Radbremsen erfolgt. Mit anderen Worten ist im By-Wire-Modus sicherzustellen, daß permanent ein ausreichender Leerweg a zur mechanischen Entkopplung des Bremspedals gegeben ist.

Um das Betätigungsgefühl bei Aktivierung der muskelkraftbetriebenen Rückfallebene weiter zu verbessern, wird in vorteilhafter Ausgestaltung der Erfindung vorgeschlagen, dass ein Mittel vorgesehen ist, um den Leerweg nach Verlassen des by-wire-Modus und zu Beginn einer muskelkraftbetriebenen Bremsbetätigung automatisch zu reduzieren. Das Mittel kann beispielsweise mittels eines elektrischen, eines elektromagnetischen, eines hydraulischen, pneumatischen oder auch pyrotechnischen Aktuators angesteuert werden, welcher bei Signaländerung oder bei ausbleibender Bestromung automatisch in eine Schließstellung zur Reduktion des Leerweges gelangt. In der Schließstellung des Aktuators wird der Leerweg a gewissermaßen abgebaut oder überbrückt. Der Leerweg a ist folglich nicht mehr zu überwinden, so daß sogar die Rückfallebene ein direktes Bremsgefühl bietet. Gleichzeitig sind aufgrund des vorgehaltenen Leerwegs a im by-wire-Modus fremdbetätigte Zustände möglich, ohne irgendwelche direkten Kraftrückwirkungen an den Fahrzeugführer weiter zu geben. Deren Erzeugung bleibt dem Simulator vorbehalten.

Nach einer ersten konstruktiven Ausgestaltung der Erfindung ist das Mittel als Kupplung zwischen zwei Betätigungsbauteilen vorgesehen. Die Kupplung kann als aktives Element über einen blockförmigen Körper verfügen, welcher beispielsweise Keilform aufweist, und als Schieber vorgesehen ist, der in den Leerweg a zwischen den Betätigungsbauteilen formschlüssig bringbar ist, und daher den Leerweg überbrückt. Weiterhin kann die Kupplung eine Feder zur elastischen Vorspannung des blockförmigen Körpers sowie einen Elektromagneten zum Rückführen oder Rückhalten des blockförmigen Körpers in der Öffnungsstellung aufweisen. Durch die Verwendung der Feder zum Schließen des Kraftfluß strebt die Kupplung beim unbestromten Zustand automatisch in die Schließstellung.

Vorzugsweise ist eine Kupplung vorgesehen ist, die durch einen Befehl zur mechanischen Ankoppelung des Bremspedals an das Betätigungsbauteil, insbesondere bei einem Ausfall des Verstärkers, das Bremspedal in seiner zum Zeitpunkt des Betätigungswunsches gegenüber dem nachgeschalteten Betätigungsbauteil befindlichen Lage an dieses direkt mechanisch ankoppelt. Der Angriffspunkt des Bremspedals wird nicht an den Angriffspunkt des Betätigungsbauteiles in dessen Längsrichtung herangeführt, sondern das Bremspedal greift unmittelbar an der Stelle an, an der sich das Betätigungsbauteil augenblicklich befindet. Dies kann beispielsweise durch eine radial bewegte Klaue oder den beschriebenen Keil geschehen, welcher die beiden Betätigungsbauteile in der Lage miteinander verbindet, in der sie sich gerade befinden.

Da die Radbremsen im by-wire-modus elektrisch angesteuert werden, fehlt eine rückwirkende Kraft des Hauptbremszylinders bzw. des nachgeschalteten Betätigungsbauteiles auf das Bremspedal. Um diese Kraft nachzubilden, wird ein entsprechender Kraftgeber (Simulator, Force-Feedback-Pedal) eingesetzt, beispielsweise eine Feder oder einen Motor, die in geeigneter Weise auf das Bremspedal entgegen dessen Betätigungsrichtung einwirken. Vorzugsweise wird dies dadurch erreicht, dass die Kupplung mit einer Druck-Feder versehen ist, die sich mit einem ersten Ende an einem Gehäuse der Kupplung und mit einem zweiten Ende an einem Übertragungsglied abstützt, wobei das Übertragungsglied mit der in ihrer Längsrichtung drehbar gelagerten Kupplungswelle verbindbar ist, wobei die Kupplungswelle gegen das Übertragungsglied in Abhängigkeit von ihrer Drehlage gegenüber dem Übertragungsglied längs verschiebbar ist oder mit dem Übertragungsglied in axialer Richtung in Eingriff steht.

Als Druckquelle können grundsätzlich unterschiedlichste Vorrichtungen Verwendung finden. Beispielsweise kann ein hydraulischer Verstärker mit mindestens einer hydraulischen Pumpe vorgesehen sein, welche im by-wire-Modus durch elektrische Signale ansteuerbar ist. Innerhalb der Rückfallebene erfolgt die Betätigung der Radbremsen muskelkraftabhängig sowie hydraulisch über einen Hauptbremszylinder. Um eine impulsartige Druckabgabe der grundsätzlich trägheitsbehaftet wirksamen Pumpe zu ermöglichen, speist die Pumpe einen Hochdruckspeicher.

Gemäß einer anderen Alternative weist die Druckquelle einen pneumatischen Verstärker und zusätzlich eine hydraulische Pumpe auf, welche beispielsweise bei Defekt des pneumatischen Verstärkers oder bei nicht ausreichender Verstärkung angesteuert wird. Außerdem kann als Druckquelle ein sogenannter aktiver - d. h. fremdansteuerbarer - pneumatischer Verstärker vorgesehen sein, welcher im by-wire-Modus durch elektrische Signale und in der Rückfallebene mechanisch durch die Betätigungsbauteile ansteuerbar ist.

Die nachstehenden Vorteile gelten für alle Verstärkerbauformen und werden exemplarisch am Beispiel eines pneumatischen Bremskraftverstärkers erläutert. Der Vorteil eines pneumatischen Verstärkers in Kombination mit einem elektromechanisch angesteuerten Simulator besteht darin, dass sich die Lage eines Betätigungsbauteiles des Verstärkers, welches wiederum von der Lage des Membrantellers des Verstärkers abhängt, in Abhängigkeit von der Lage des Bremspedals und damit des Ausgangssignals Betätigungssensors durch eine Programmierung in gewünschter Weise festlegen lässt. Mit anderen Worten kann der Leerweg a in Abhängigkeit von sensorisch erfassten Randbedingungen auf vorbestimmte Werte eingestellt werden.

Wie schon erläutert lassen sich einzelne Stellungen des Bremspedals einer zugehörigen Lage des nachgeschalteten Betätigungsbauteiles und damit insbesondere der Lage des Membrantellers des pneumatischen Verstärkers zuordnen. Im Ergebnis lässt sich Bremspedalweg verkürzen und die Leerwege können so gering wie nötig gestaltet werden. Umgekehrt kann lediglich geringfügigen Bewegungen des bremspedalseitigen Betätigungsbauteiles aus dessen Null-Lage heraus hinreichende Verschiebungen des Membrantellers und damit des Betätigungsbauteiles des Verstärkers zugeordnet werden. Mit anderen Worten wird in jedem Falle ein hinreichender Abstand a generiert.

Auch die mittels einer sogenannten optimierten hydraulischen Bremsanlage unter Vakuumbremskraftverstärkereinsatz (OHBV) erreichbaren Funktionen lassen sich mit der erfindungsgemäßen Betätigungsvorrichtung durchführen. Bei OHBV-Systemen wird eine nicht ausreichende Vakuumbremskraftverstärkerfunktion durch andere Mittel kompensiert. Beispielsweise wird anhand geeigneter Sensorik der Differenzdruck in pneumatischen Verstärkerdruckkammern und zusätzlich der im Bremssystem von dem pneumatischen Verstärker generierte hydraulische Bremsdruck gemessen und mit einem Fahrerwunsch verglichen. Der Fahrerwunsch ist beispielsweise über die Betätigungsstellung des Bremspedals abgreifbar. Weicht jedoch der gemessene Bremsdruck von dem Fahrerwunsch hinreichend ab, so wird eine hydraulische Pumpe oder ein anderes Organ angesteuert, um für den Ausgleich des Druckdefizites zu sorgen.

Da der Vakuumbremskraftverstärker, der Hauptbremszylinder oder die nachgeschaltete Verteilvorrichtung mit einem geeigneten Sensor versehen ist, so lässt sich hierdurch ebenfalls der Systemdruck ermitteln und die OHBV-Funktion ermöglichen. Durch Einsatz eines Drucksensors ist eine Ermittlung eines Druckes auf ein elastisches Redaktionselement (Reaktionsscheibe) des Verstärkers möglich. Dabei kann das Signal des Wegsensors zur Ermöglichung einer Bremsassistentenfunktion (BA) herangezogen werden.

Vorteilhaft ist weiterhin, dass die von dem Simulator auf das Bremspedal ausgeübte Rückwirkung in Abhängigkeit von der Verstärkung des Verstärkers bzw. dem Ausgangsdruck des Hauptbremszylinders infolge Programmierung beliebig einstellbar ist. So kann beispielsweise das Anlaufen der Pumpe bei zu geringem Ausgangsdruck oder das nicht Erreichen eines Sollwertes durch Erhöhung der Rückwirkungskraft von dem Simulator auf das Bremspedal an den Fahrer gemeldet werden (beispielsweise durch verstärktes Zurückdrängen). Selbstverständlich ist es auch möglich, lediglich das ergänzende Verstärkungsmittel zuzuschalten und auf eine Rückmeldung zu verzichten, um den Fahrer nicht zu beunruhigen.

Selbstverständlich sind als Ersatz für das Zurückdrängen auch anderer Anzeigemöglichkeiten denkbar wie beispielsweise eine optische Warnung oder eine akustischer Warnung unter Verwendung entsprechender Anzeigeelemente.

Durch die Möglichkeit der Programmierung des gewünschten Verstärkeroutput in Abhängigkeit von der Stellung des Bremspedals lässt sich auch das Bremspedalgefühl bzw. die Gesamtverstärkung (Summe von beispielsweise Vakuumbremskraftverstärkerwirkung und zusätzlicher Verstärkerwirkung) beliebig den Wünschen anpassen. So kann beispielsweise das Verstärkungsverhältnis (Ausgangskraft im Verhältnis zur Eingangskraft) bei niedrigeren Bremskräften im Sinne einer besseren Dosierbarkeit niedrig gehalten werden, während bei mittleren Bremskräften ein hohes Verstärkungsverhältnis gewählt werden kann, was dann beim Übergang in den Aussteuerpunkt des Bremskraftverstärkers (Sättigung) allmählich zurückgeführt wird, um einen scharfen Knick und Dosierungsprobleme zu vermeiden.

Ein besonders großer Vorteil der Erfindung wird dadurch erreicht, dass im Falle des Ausfalls von elektrischen Ansteuerungssignalen eines aktiven Vakuumbremskraftverstärkers, insbesondere bei einem Ausfall einer Energieversorgung der Bremsbetätigungsvorrichtung, der Verstärker direkt mechanisch ansteuerbar ist, womit bei Ausfall der Elektronik eine gesicherte Rückfallebene vorliegt. In diesem Fall arbeitet ein pneumatischer Verstärker wie ein üblicher pneumatischer Bremskraftverstärker, bei hydraulischen Vestärkern tritt das hydraulische Übersetzungsverhältnis im Hauptbremszylinder in Aktion.

In Abhängigkeit von den zur Verfügung gestellten Sensoren kann auch eine Stufung der Rückfallebenen vorgesehen werden. Fällt beispielsweise einer von zwei Bremskreise aus, so kann die Verstärkung so eingerichtet werden, dass dem intakten Bremskreis eine höherer Bremsdruck zuführt wird. Wenn sich das Fahrzeug im Grenzbereich der Fahrstabilität befindet, empfiehlt sich der Einsatz von Antiskid-Maßnahmen wie Antiblockiersystem (ABS) oder Elektronisches Stabilitätsprogramm (ESP). Vorteilhafterweise wird der Ausfall eines Bremskreises eine Warnung des Fahrers durch obengenannte Anzeigeelemente auslösen.

Auch für ESP-Funktionen ist die erfindungsgemäße Bremsbetätigungsvorrichtung mit großem Vorteil einsetzbar. Da die ESP-Funktionalität auf einer, die Fahrstabilität gefährdende Geschwindigkeit beruht, und eine radindividuelle Betätigung ohne Bremswunsch erfordert, kommt es auf besonders schnelle Druck impulse an ausgewählten Radbremsen an. Dies wird erfindungsgemäß gewährleistet, indem ein gesonderter Verstärker wie insbesondere ein pneumatisch arbeitender Verstärker, ein hydraulischer Verstärker oder ein sonstiges Mittel zugeschaltet wird. Die Verhältnisse sind in etwa vergleichbar einer AntriebsSchlupf-Regelung (ASR), innerhalb derer Antriebsschlupf durch Brems- und ggf. Motorreingriff reduziert werden soll.

Die erfindungsgemäße Bremsbetätigungsvorrichtung lässt weiterhin zu, dass der Verstärker auch in Abhängigkeit von weiteren, unabhängig von der Lage des Bremspedalhebels auftretenden Parametern angesteuert werden kann, wie beispielsweise ABS, ESP, Intelligente Geschwindigkeits-Regelung (ICC), ASR und anderen Signalen, die durch den Fahrzustand des Fahrzeugs oder einen Fahrerwunsch wie beispielsweise das Anfahren am Berg ausgelöst werden.

Bei Verwendung eines aktiven Vakuumbremskraftverstärkers ist Vorteilhaft kein Hochdruckspeicher erforderlich und die Herstellung des Bremssystems erfolgt kostengünstig bei raumsparender Anordnung. Sensorsignale werden einer zentralen Steuereinheit zugeführt, und der Sensorbedarf ist generell gering. Für die meisten der genannten Funktionen genügt ein Weg- oder Drehwinkelsensor am Bremspedal zur Feststellung des Fahrerwunsches, und der beschriebene Wegsensor zum Feststellen der Lage des Membrantellers und deren Abweichung zwecks Regelung des Verstärkers bzw. zur Feststellung des OHBV-Falles, sowie ein hydraulischer Drucksensor in mindestens einem Bremskreis zur Ermittlung des Istwertes im Bremssystem und zur Feststellung der Abweichung des Ist-Wertes von dem Fahrerwunsch unter Berücksichtigung von Sicherheitsmaßnahmen und dem OHBV-Modus. Wenn ein sogenanntes Force-Feedback-Pedal Verwendung findet, kann dem Force-Feedback-Aktuator (Rückwirkungskrafterzeuger) ein Drehwinkel- oder Wegsensor zugeordnet werden, so daß im Pedalbereich insgesamt zwei Drehwinkel bzw. Wegsensoren vorgesehen sind, deren Signale der zentralen Steuereinheit zugeführt werden.

Ein pneumatischer Bremskraftverstärker kann zusätzlich über einen pneumatischen Drucksensor oder Differenzdrucksensor verfügen, welcher den pneumatischen Druckes bzw. eine Druckdifferenz zwischen pneumatischen Kammern sensiert.

Auf Grund aller Sensorinformationen ist die elektronische Steuereinheit in der Lage, eine Fehlfunktion wie beispielsweise Lufteinschluss oder Kreisausfall in einem Bremskreis oder der gesamten Bremsanlage zu erkennen und geeignete Gegenmaßnahmen, wie insbesondere die Rückfallebene, auszulösen.

Zusätzlich erlaubt es die oben genannte Sensorik, den Aussteuerpunkt des Verstärkers oder einen nicht ausreichenden Unterdruck in einer Unterdruckkammer zu erkennen und über die Elektronikeinheit die hydraulische Pumpe zwecks zusätzlicher Verstärkung zu starten.

Im Zusammenhang mit dem Hauptanspruch wurde erläutert, dass die Erfindung eine mechanische Entkopplung des Bremspedals ermöglicht. Da die Erfindung voraussetzt, dass der Verstärker nicht nur in der Rückfallebene über das Bremspedal mechanisch angesteuert werden kann, sondern im by-wire-Modus durch ein elektrisches Betätigungssensor-Signal, ist es durch eine entsprechende Programmierung immer möglich, den Verstärker durch eine geeignete Verstärkung des elektrischen Signals derart anzusteuern, dass sein Betätigungsbauteil vor dem mechanischen Angriffspunkt des Bremspedals in einem vorbestimmten Leerweg a voraus läuft. Das Betätigungssensor-Signal ist dabei von der Lage des Bremspedals abhängig, so dass bei einer bestimmten Verschiebung des Bremspedals der Verstärker auch um einen vorgegebenen Betrag angesteuert wird und damit sein Betätigungsbauteil um einen entsprechenden Weg mitnimmt. Dieser Weg wird nun so gewählt, dass zwischen dem mechanischen Angriffspunkt des Bremspedals am Betätigungsbauteil und dem Betätigungsbauteil selbst immer ein bestimmter Leerweg a bleibt, was zur mechanischen Entkoppelung zwischen Bremspedal und Betätigungsbauteil führt.

Für den Fall, dass beispielsweise die Energieversorgung für den Verstärker oder die Arbeitsweise des Verstärkers selbst gestört ist, wird der Leerweg überbrückt und das Bremspedal wirkt nunmehr zumindest mittelbar mechanisch auf das Betätigungsbauteil des Verstärkers ein. Es ist also auch in diesem Fall für den Fahrer noch möglich, die Bremse zu betätigen, wobei allerdings die verstärkende Kraft des Verstärkers nicht mehr gegeben ist. Dieser Zustand wird als Rückfallebene bezeichnet, weil die Bremsbetätigungsvorrichtung in der genannten Notsituation von der elektrischen Ansteuerung des Verstärkers (by wire) auf die direkte mechanisch/hydraulische Ansteuerung zurück fällt.

Die oben genannten Bremssysteme basieren ganz generell auf dem elektrohydraulischen Prinzip in Bezug auf alle Radbremsen. Es versteht sich jedoch, daß die Erfindung mit besonderem Vorteil auch bei sogenannten Hybridsystemen eingesetzt werden kann, bei denen beispielsweise ein Paar hydraulischer Radbremsen für eine Vorderachse und ein Paar elektromechanischer Aktuatoren für eine Hinterachse vorgesehen sind. Derartige Systeme sind sogar auf Basis einer 12(14)-Volt-Bordnetzstruktur darstellbar, und verfügen über den Vorteil, daß bei Stromausfall in einer Rückfallebene dennoch die hydraulischen Radbremsen der Vorderachse direkt betätigbar sind.

Ein Ausführungsbeispiel der Erfindung wird nachfolgend anhand der Zeichnung erläutert. Darin zeigt jeweils schematisch
Fig. 1 eine erste Ausführungsform einer Bremsbetätigungsvorrichtung mit Vakuumbremskraftverstärker in einem unbetätigten Zustand,
Fig. 2 die Bremsbetätigungsvorrichtung nach Fig. 1 im Arbeitszustand,
Fig. 3 einen Schnitt durch eine nicht beanspruchte leerwegreduzierte Ausführungsform,
Fig. 4 und 5 Skizzen zur Verdeutlichung einer zweiten leerwegreduzierten Ausführungsform, und
Fig. 6 eine Anwendung einer Bremsbetätigungsvorrichtung bei einem Hybridbremssystem.

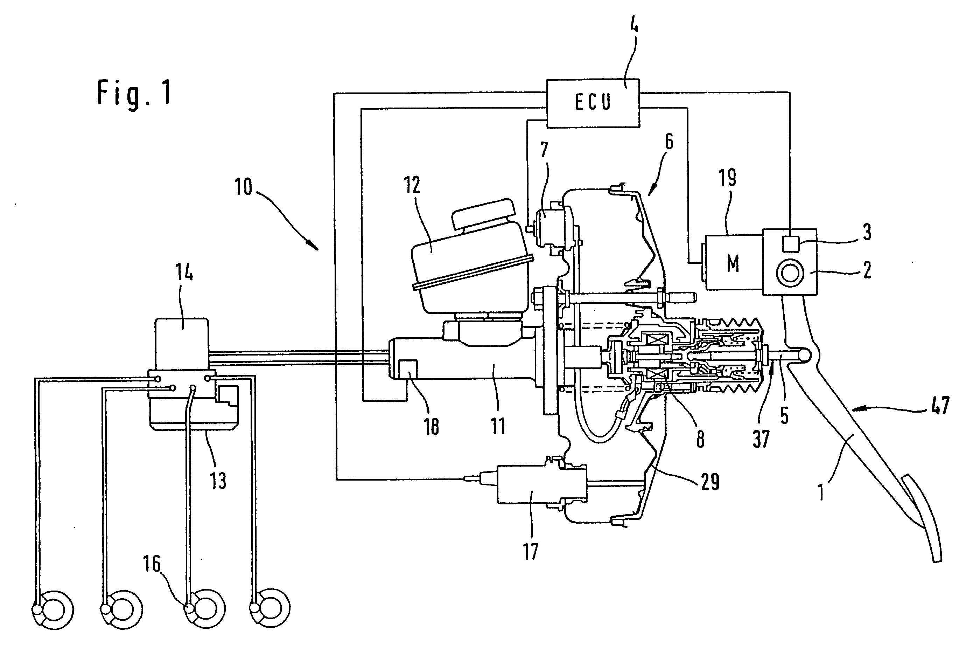

Eine Bremsbetätigungsvorrichtung besitzt gemäß Fig. 1 ein Bremspedal 1 welches mit einem Simulator 2 versehen ist. Der Simulator 2 weist wenigstens einen, vorzugsweise zwei redundant vorgesehene Betätigungssensoren 3 auf, deren Ausgangsignale einer elektronischen Steuerung 4 (ECU) zugeführt werden. Das Bremspedal 1 lässt sich über ein Betätigungsbauteil 5 eines pneumatischen Verstärkers 6 mechanisch mit dem Verstärker 6 koppeln. Eine derartige Verbindung ist bei den bekannten pneumatischen Verstärkern 6 üblich, da sie durch das Bremspedal 1 über das Betätigungsbauteil 5 mechanisch analog angesteuert werden. Für den Fall, dass die Elektronikeinheit 4 ausfällt, ist eine derartige Ansteuerung auch bei der erfindungsgemäßen Bremsbetätigungsvorrichtung möglich und bildet eine sichere Rückfallebene. Der Verstärker 6 ist außer über das Betätigungsbauteil 5 aber auch durch ein Ausgangsignal der elektronischen Schaltung 4 über einen Anschluss 7 elektrisch ansteuerbar. Das geschieht mittels eines magnetischen Antriebs 8, der an dem Betätigungsbauteil 5 angreift und der über den Anschluss 7 mit Stromsignalen versorgt wird.

Zu einer Verteilvorrichtung 10 der Bremsbetätigungsvorrichtung gehören ein Hauptbremszylinder 11 mit einem zugehörigen Behälter 12 und eine Ventilschaltung 13, die gegebenenfalls mit einer Pumpe oder einem Pumpenmotor 14 versehen ist. Von Ausgängen der Ventilschaltung 13 werden Radbremsen 16 betätigt. Der Verstärker 6 ist mit einem Wegsensor 17 versehen, während der Hauptbremszylinder 11 an seinem Ausgang einen Drucksensor 18 aufweist.

Der Simulator 2 kann mechanisch ausgebildet sein, und beispielsweise eine Feder aufweisen. Darüber hinaus ist es möglich, den Simulator zwecks einfacherer Abänderung der Kennlinie elektrisch anzusprechen, indem man Ihn mit einem Motor 19 versieht, durch welchen die gewünschte Rückwirkungskraft auf das Bremspedal 1 ausgeübt wird. Hierdurch wird ermöglicht, daß der Fahrer die Wirkung der Bremse in bekannter Weise kraftabhängig dosieren kann, selbst wenn das Bremspedal 1 (im by-wire-Modus) von dem Bremssystem mechanisch entkoppelt ist.

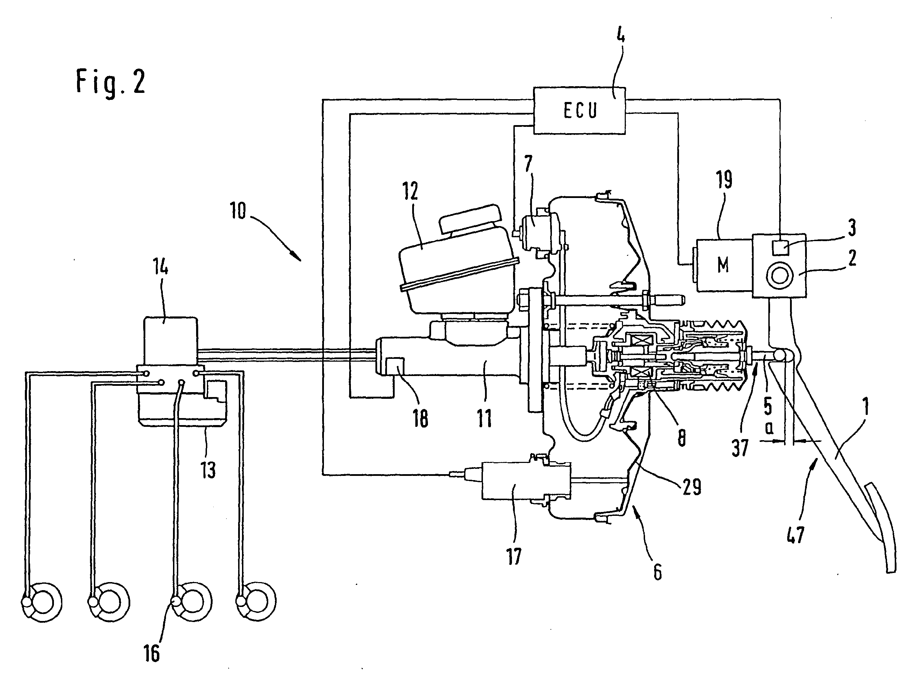

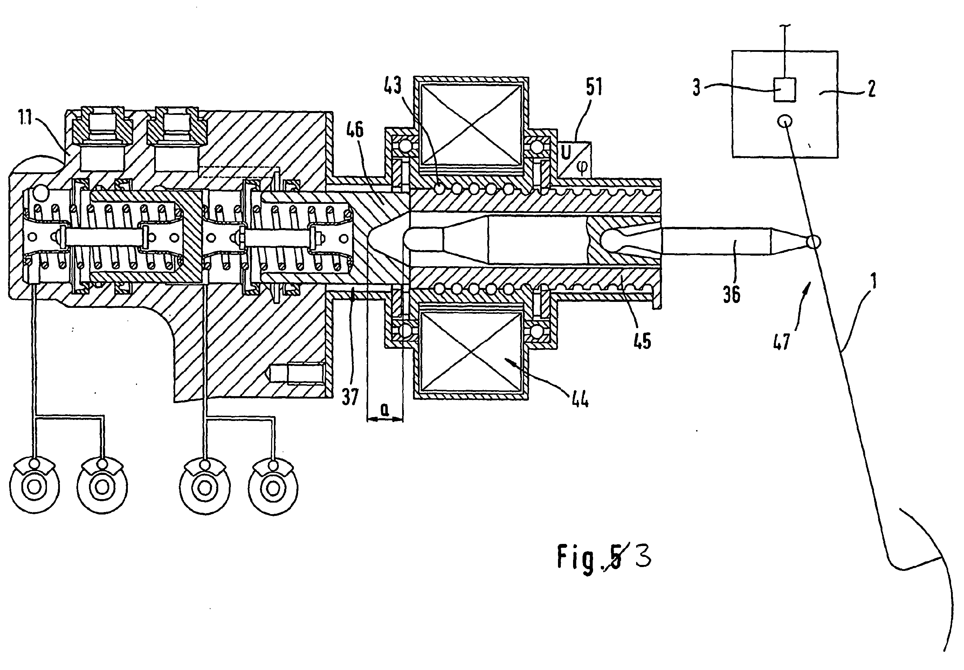

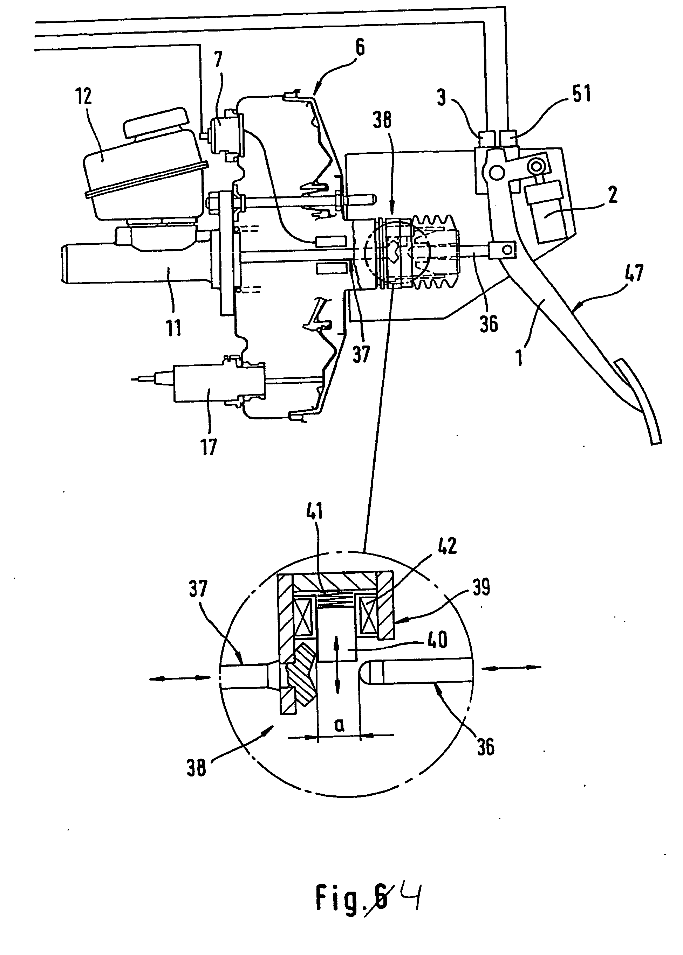

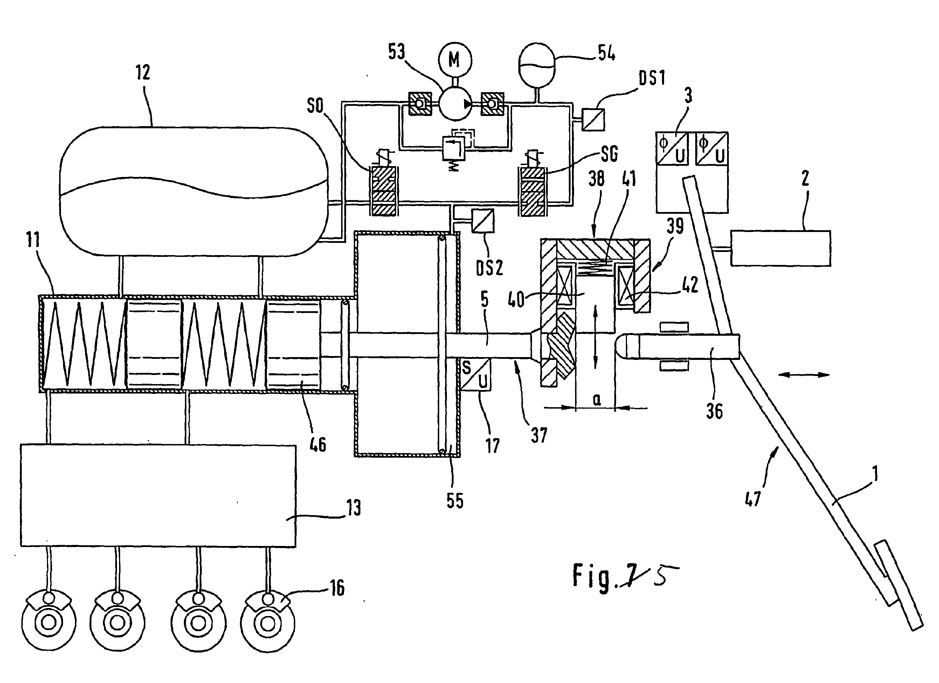

Fig. 2 zeigt die im by-wire-Modus erwünschte mechanische Entkoppelung des Bremspedals 1 von dem Verstärker 6 bzw. dessen Eingangsglied 5. Wird in diesem Zustand das Bremspedal 1 betätigt, so gibt der Betätigungssensor 3 an die Elektronikeinheit 4 ein Signal ab, welches die Winkelstellung des Bremspedals 1 beschreibt. Durch ein, in der elektronischen Steuerung 4 gespeichertes entsprechendes Programm wird in Abhängigkeit von dem Ausgangsignal des Betätigungssensors der magnetische Antrieb 8 betätigt. Dies entspricht einer bestimmten mechanischen Eingangskraft am Betätigungsbauteil 5, wie sie bei den üblichen Verstärkern 6 durch das Bremspedal 1 ausgeübt wird. Durch das gespeicherte Programm kann über den elektromagnetischen Antrieb 8 einer Bewegung des Bremspedals 1 eine entsprechende Bewegung des Betätigungsbauteiles 5 in weiten Grenzen zugeordnet werden. Diese Bewegung wird dabei so gewählt, dass das Betätigungsbauteil 5 einen hinreichend kleinen Abstand a von dem Bremspedal behält, so dass das Betätigungsbauteil von dem Bremspedal 1 mechanisch entkoppelt ist.

Mit Hilfe des Wegsensors 17 kann der von einem Membranteller 29 des Verstärkers 6 tatsächlich zurückgelegte Weg bestimmt werden, wodurch der Verstärker 6 auf den gewünschten Wert geregelt werden kann. Weicht dieser gemessene Weg von dem durch die Elektronikeinheit 4 vorgegebenen Weg dauerhaft hinreichend ab, beispielsweise durch einen Ausfall oder einen Fehler im Bremssystem, so wird ein Fehlersignal gemeldet, welches geeignete Prozesse in dem Bremssystem auslöst. In entsprechender Weise wirkt der Drucksensor 18 im oder am Ausgang des Hauptbremszylinders 11.

Die Funktionsweise der Erfindung lässt sich somit kurz wie folgt angeben. Ein elektromechanisches Stellglied zur Erzeugung der Bremspedalsimulationskraft erkennt mittels der geeigneten Sensorik 3 den Fahrerwunsch und übermittelt diesen der ECU 4, die wiederum den fremd ansteuerbaren Verstärker 6 ansteuert. Der Verstärker 6 läuft schneller in Richtung des Hauptbremszylinders 11 als das Bremspedal 1, somit erzeugt der Simulator 2 über den Motor 19 eine Gegenkraft zur Fahrerfußkraft und der Fahrer ist unter normalen Umständen entkoppelt wie bei einem "brake-by-wire"-System. Die Eingangskraftcharakteristik und das Verzögerungsverhalten sind frei und unabhängig voneinander programmierbar. Fallen ECU 4 oder Simulator 2 aus, kann das System wie eine konventionelle Bremsanlage betrieben werden.

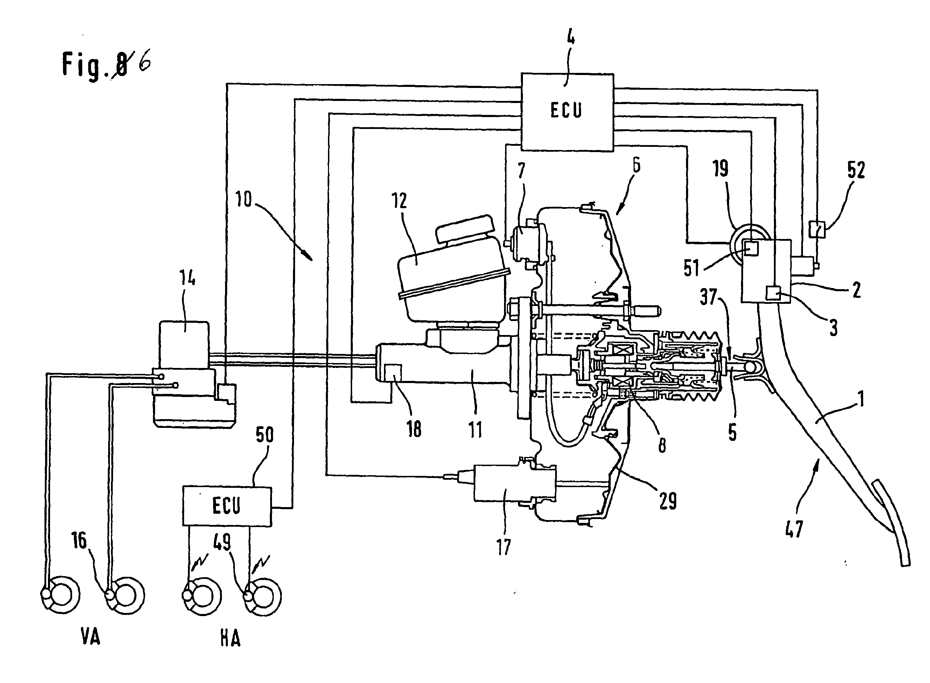

Eine nicht beanspruchte Lösung zur elektromotorischen Betätigung eines Hauptbremszylinder 11 mittels einem Kugelgewindetrieb 43 ist in Fig. 3 dargestellt. Eine Bewegung eines by-wire-Bremspedals 1 wird sensorisch 3 erfasst und das Signal einer nicht dargestellten Steuereinheit zugeführt. Weil das Bremspedal 1 mechanisch entkoppelt ist (Leerweg a) verspürt der Fahrer lediglich Rückwirkungskräfte, welche infolge eines Simulators 2 erzeugt werden. Die Steuereinheit 4 bewirkt die Bestromung eines Elektromotors 44, was zu einer Rotordrehbewegung führt, deren Bewegung mittels dem Kugelgewindetrieb 43 in eine axial gerichtete Verschiebungsbewegung einer rohrförmigen Hülse 45 umgewandelt wird, so daß auf diesem Wege ein Hydraulikkolben 46 (als nachgeschaltetes Betätigungsbauteil) des Hauptbremszylinders 11 betätigt wird. An dem Bremspedal 1 ist ferner wenigstens ein Betätigungsbauteil 47 angelenkt, welches innerhalb der rohrförmigen Hülse 45 verschiebbar angeordnet ist, und dessen Ende im unbetätigten Zustand sowie im by-wire-Modus einen Leerweg a zu dem nachgeschalteten Betätigungsbauteil 46 (Hydraulikkolben) aufweist, was die Entkopplung bewirkt. In der Rückfallebene wird der Leerweg a überwunden, und es erfolgt eine unmittelbar direkte Betätigung über das Bremspedal 1 und die beiden Betätigungsbauteile 37,47.

Die Ausführungsformen gemäß Fig. 4 und 5 verfügen über eine prinzipiell miteinander übereinstimmende Kupplung 38 zur Reduktion des Leerweges a in der Rückfallebene. Obwohl diese Kupplung 38 in Fig. 4 in Verbindung mit einem Vakuumbremskraftverstärker 6 dargestellt ist, können wie bereits beschrieben unterschiedliche Verstärkerkonzepte wie insbesondere hydraulische Verstärker Verwendung finden.

Gemäß Fig. 4 ist die Kupplung 38 zwischen den beiden Betätigungsbauteilen 37,47 vorgesehen, und verfügt über einen blockförmigen Körper 40, welcher derart formschlüssig in den Leerweg a einbringbar ist, daß der Leerweg a formschlüssig überbrückt wird. Die Anordnung ist einem Türriegel vergleichbar, und der Körper 40 wird in der Rückfallebene infolge fehlender Bestromung einer rückhaltenden Vorrichtung zwecks Leerwegreduktion automatisch zwischen die beiden Betätigungsbauteile 37,47 geschoben. Als Antrieb ist in diesem Zusammenhang eine elastisch vorgespannte Feder 41 vorgesehen, welche den Körper 40 in den Zwischenraum drängt. Die Funktion der Vorrichtung gemäß Fig. 5 stimmt mit Ausnahme des Verstärkers damit überein.

Der anhand Fig. 5 beispielhaft verdeutlichte hydraulische Verstärker umfasst eine aus dem Behälter 12 ansaugende motorgetriebene Pumpe 53, welche einen Hochdruckspeicher 54 speist. Zur Druckerhöhung kann der Hochdruckspeicher 54 eine Druckkammer 55 füllen. Die Druckregelung erfolgt mittels einem stromlos geschlossenen Elektromagnetventil (SG) und einem stromlos geöffneten Elektromagnetventil (SO) in einem Behälterabzweig. Nur durch Öffnen des SG-Ventiles kann Volumen aus dem Hochdruckspeicher 54 in die Druckkammer 55 abgelassen werden. Vor dem SG-Ventil und nach dem SG-Ventil ist jeweils ein Drucksensor DS 1 und DS 2 angeordnet, wobei DS 1 eine Speicherfüllstandüberwachung zwecks Pumpeneinschaltung und DS2 die Druckregelung in den den Bremskreisen ermöglicht.

Die Fig. 6 verdeutlicht ein by-wire-Bremsbetätigungssystem mit einem elektronisch betätigbaren, pneumatischen Bremskraftverstärker 6 in Verbindung mit zwei elektromechanisch über eine gesonderte Elektronikeinheit (50,ECU) ansteuerbaren elektromechanischen Radbremsen 49 für eine Hinterachse, und mit zwei elektrohydraulisch ansteuerbaren Radbremsen 16 für eine Vorderachse. Die hydraulischen Radbremsen 16 der Vorderachse werden über eine Verteilvorrichtung (Hydraulikeinheit, HCU;10)) gespeist, welche wiederum über eine Elektronikeinheit 4 (ECU) angesteuert wird. Dieser ECU 4 werden Signale eines (Membran)Wegsensors 17 und eines Drucksensors 18 zugeführt, welcher in dem Bremskreis der vorderen Radbremsen 16 angeordnet ist. Des weiteren erhält die ECU 4 die Signale von zwei Weg- oder Drehsensoren 3,51 welche dem Bremspedal 1 und einem Simulator (Force-Feedback-Pedal) 2 zur Erzeugung von Rückwirkungskräften zugeordnet sind. Ein Bremslichtschalter 52 speist ebenfalls sein Signal in die ECU 4 ein. Die ECU 4 bewirkt zusammen mit dem Verstärker 6 und der Verteilvorrichtung 10 die Versorgung der hydraulischen Radbremsen 16 mit dem erforderlichen hydraulischen Druck und ermöglicht ferner eine fahrerunabhängige Ansteuerung des Bremskraftverstärkers 6 wie auch die Ansteuerung des Simulators 2.

### Bezugszeichenliste

- 1: Bremspedal
- 2: Simulator
- 3: Betätigungssensor
- 4: Elektronikeinheit
- 5: Eingangsglied
- 6: Verstärker
- 7: Anschluss
- 8: Antrieb
- 10: Verteilvorrichtung
- 11: Hauptbremszylinder
- 12: Behälter
- 13: Ventilschaltung
- 14: Pumpenmotor
- 15:
- 16: Radbremsen
- 17: Wegsensor
- 18: Drucksensor
- 19: Motor
- 29: Membranteller
- 36: Bauteil
- 37: Betätigungsbauteil
- 38: Mittel
- 39: Aktuator
- 40: Körper
- 41: Feder
- 42: Elektromagnet
- 43: Kugelgewindetrieb
- 44: Elektromotor
- 45: Hülse
- 46: Hydraulikkolben
- 47: Betätigungsbauteil
- 49: elektromechanische Radbremse
- 50: Elektronikeinheit
- 51: Weg- oder Drehsensor
- 52: Bremslichtschalter
- 53: Pumpe
- 54: Hochdruckspeicher
- 55: Druckkammer

- SG: Elektromagnetventil
- SO: Elektromagnetventil
- DS1: Drucksensor
- DS2: Drucksensor

## Patentansprüche

1. By-Wire-Bremsbetätigungsvorrichtung zur Betätigung einer Kraftfahrzeugbremsanlage, mit einem mittels eines Bremspedals (1) mechanisch beaufschlagbaren Simulator (2), wobei der Simulator (2) wenigstens ein Betätigungssensor (3) aufweist und ein Ausgangssignal des Betätigungssensors (3) einer Elektronikeinheit (4) zugeführt wird, welche in Abhängigkeit von diesem Signal einen pneumatischen oder hydraulischen Bremskraftverstärker (6) als Druckquelle ansteuert, dem ein Hauptbremszylinder (11) nachgeschaltet ist, der mit Radbremsen (16) des Fahrzeugs verbindbar ist, wobei der Bremskraftverstärker (6) in einer Rückfallebene über ein erstes Betätigungsbauteil (47), wie insbesondere das Bremspedal (1) oder ein an dem Bremspedal (1) angelenktes Bauteil (36;21), und ein im Kraftfluss nachgeschaltetes zweites Betätigungsbauteil (37), wie insbesondere ein Eingangsglied (5) des Bremskraftverstärkers (6), mechanisch ansteuerbar ist und im by-wire-Modus zwischen dem ersten Betätigungsbauteil (47) und dem zweiten Betätigungsbauteil (37) ein Leerweg (a) zur mechanischen Entkopplung des ersten Betätigungsbauteils (47) von Kraftrückwirkungen der Kraftfahrzeugbremsanlage vorgesehen ist, **dadurch gekennzeichnet, dass** ein Wegsensor (17) in dem Bremskraftverstärker (6) und ein hydraulischer Drucksensor (18) in einem Bremskreis vorgesehen sind, welche Abweichungen von Sollwerten detektieren, und dass die Elektronikeinheit (4) auf Grund festgestellter hinreichender Abweichungen eine Fehlfunktion in der Bremsanlage erkennt und die Rückfallebene auslöst.

2. By-Wire-Bremsbetätigungsvorrichtung nach Anspruch 1, **dadurch gekennzeichnet, dass** der Bremskraftverstärker (6) einen pneumatischen Drucksensor oder Differenzdrucksensor aufweist.

3. By-Wire-Bremsbetätigungsvorrichtung nach Anspruch 1 oder 2, **dadurch gekennzeichnet, dass** ein Mittel (38) vorgesehen ist, um den Leerweg (a) nach einem by-wire-Modus zu Beginn einer muskelkraftbetriebenen Bremsbetätigung automatisch zu reduzieren.

4. By-Wire-Bremsbetätigungsvorrichtung nach Anspruch 3, **dadurch gekennzeichnet, daß** das Mittel (38) mittels eines elektrischen, elektromagnetischen, hydraulischen oder pneumatischen Aktuators (39) angesteuert ist, welcher in der Rückfallebene automatisch in eine Schließstellung zur Reduktion des Leerweges (a) gelangt.

5. By-Wire-Bremsbetätigungsvorrichtung nach Anspruch 4, **dadurch gekennzeichnet, dass** das Mittel (38) einen blockförmigen Körper (40) aufweist, welcher den Leerweg (a) zwischen den Betätigungsbauteilen (47,37) formschlüssig überbrückt.

6. By-Wire-Bremsbetätigungsvorrichtung nach Anspruch 5, **dadurch gekennzeichnet, dass** der Aktuator (39) eine Feder (41) zur elastischen Vorspannung des blockförmigen Körpers (40) sowie einen Elektromagneten (42) zum Rückführen oder Rückhalten des blockförmigen Körpers (40) in der Öffnungsstellung aufweist.

7. By-Wire-Bremsbetätigungsvorrichtung nach Anspruch 1, **dadurch gekennzeichnet, dass** die Druckquelle einen hydraulischen Bremskraftverstärker mit mindestens einer hydraulischen Pumpe (53) umfasst, welche im by-wire-Modus durch elektrische Signale ansteuerbar ist, und dass die Betätigung in der Rückfallebene hydraulisch über den Hauptbremszylinder (11) erfolgt.

8. By-Wire-Bremsbetätigungsvorrichtung nach Anspruch 7, **dadurch gekennzeichnet, dass** die Pumpe (53) einen Hochdruckspeicher (54) speist.

9. By-Wire-Bremsbetätigungsvorrichtung nach Anspruch 1 oder 2, **dadurch gekennzeichnet, dass** die Druckquelle einen pneumatischen Bremskraftverstärker (6) umfasst, welcher im by-wire-Modus durch elektrische Signale und in der Rückfallebene mechanisch durch die Betätigungsbauteile (47,37) ansteuerbar ist.

10. By-Wire-Bremsbetätigungsvorrichtung nach Anspruch 9, **dadurch gekennzeichnet, dass** die Druckquelle einen pneumatischen Bremskraftverstärker (6) und zusätzlich eine hydraulische Pumpe aufweist, welche beispielsweise bei Defekt des pneumatischen Bremskraftverstärkers (6) oder bei nicht ausreichender Verstärkung angesteuert wird.

11. By-wire-Bremsbetätigungsvorrichtung nach Anspruch 10, **dadurch gekennzeichnet, dass** der Wegsensor (17) und/oder ein Drucksensor/Differenzdrucksensor einen Aussteuerpunkt des Bremskraftverstärkers (6) erkennt und daß über die Elektronikeinheit (4) die hydraulische Pumpe gestartet wird.

12. By-wire-Bremsbetätigungsvorrichtung nach Anspruch 1, **dadurch gekennzeichnet, dass** der Simulator (2) einen Motor (19) oder eine Feder (28) aufweist, welche zur Erzeugung von Rückwirkungskräften dient.

## Claims

1. Brake-by-wire actuator for actuating the brake system of a motor vehicle, comprising a simulator (2) which can be acted upon mechanically by a brake pedal (1), with the simulator (2) including at least one actuation sensor (3) and an output signal of the actuation sensor (3) being sent to an electronic control unit (4), which controls a pneumatic or hydraulic brake booster (6) as a pressure source in response to this signal, and with a master brake cylinder (11) being connected downstream of the brake booster and being connectable to wheel brakes (16) of the vehicle, wherein the brake booster (6) in a fallback mode is mechanically actuatable by way of a first actuation component (47), such as in particular the brake pedal (1) or a component (36; 21) articulated at the brake pedal (1), and by way of a second actuation component (37) such as an input member (5) of the brake booster being connected downstream in the flux of forces, while in the by-wire mode a lost travel (a) is provided between the first actuation component (47) and the second actuation component (37) for mechanically uncoupling the first actuation component (47) from reactions of force of the motor vehicle brake system,
**characterized in that** there is provision of a travel sensor (17) in the brake booster (6) and a hydraulic pressure sensor (18) in a brake circuit, which detect deviations from nominal values, and **in that** the electronic unit (4) on account of detected sufficient deviations detects a malfunction in the brake system and initiates the fallback mode.

2. Brake-by-wire actuator as claimed in claim 1,
**characterized in that** the brake booster (6) includes a pneumatic pressure sensor or differential pressure sensor.

3. Brake-by-wire actuator as claimed in claim 1 or 2,
**characterized in that** a means (38) is provided in order to automatically reduce the lost travel (a) after a by-wire mode at the commencement of a brake actuation executed by muscular power.

4. Brake-by-wire actuator as claimed in claim 3,
**characterized in that** means (38) is actuated by means of an electric, electromagnetic, hydraulic, or pneumatic actuator (39), which will automatically adopt a closing position for reducing the lost travel (a) in the fallback mode.

5. Brake-by-wire actuator as claimed in claim 4,
**characterized in that** means (38) comprises a block-shaped body (40) which bridges the lost travel (a) between the actuation components (47, 37) in a form-fit manner.

6. Brake-by-wire actuator as claimed in claim 5,
**characterized in that** the actuator (39) includes a spring (41) for elastically preloading the block-shaped body (40) and a solenoid (42) for returning or keeping back the block-shaped body (40) in the opening position.

7. Brake-by-wire actuator as claimed in claim 1,
**characterized in that** the pressure source comprises a hydraulic brake booster with at least one hydraulic pump (53), which is actuatable by electric signals in the by-wire mode, and **in that** the actuation in the fallback mode is carried out hydraulically by way of a master brake cylinder (11).

8. Brake-by-wire actuator as claimed in claim 7,
**characterized in that** the pump (53) feeds a high-pressure accumulator (54).

9. Brake-by-wire actuator as claimed in claim 1 or 2,
**characterized in that** the pressure source comprises a pneumatic brake booster (6), which is actuatable by electric signals in the by-wire mode and mechanically by way of the actuation components (47, 37) in the fallback mode.

10. Brake-by-wire actuator as claimed in claim 9,
**characterized in that** the pressure source includes a pneumatic brake booster (6) and additionally a hydraulic pump (53) being actuated, for example, in the event of a defect of the pneumatic brake booster (6) or when boosting is not sufficient.

11. Brake-by-wire actuator as claimed in claim 10,
**characterized in that** the travel sensor (17) and/or a pressure sensor/differential pressure sensor detects a point of maximum boosting of the brake booster (6), and **in that** the hydraulic pump (53) is started by way of the electronic unit (4).

12. Brake-by-wire actuator as claimed in claim 1,
**characterized in that** the simulator (2) includes a motor (19) or a spring (28) used to generate reaction forces.

## Revendications

1. Dispositif d'actionnement de frein by-wire pour l'actionnement d'un système de frein de véhicule automobile, comportant un simulateur (2) qui peut être sollicité mécaniquement au moyen d'une pédale de frein (1), le simulateur (2) comportant au moins un capteur d'actionnement (3) et un signal de sortie du capteur d'actionnement (3) étant envoyé à une unité électronique (4) qui commande, en fonction de ce signal, un servofrein (6) pneumatique ou hydraulique en tant que source de pression en aval duquel est monté un cylindre de frein principal (11) qui peut être relié à des freins de roue (16) du véhicule, le servofrein (6) pouvant être commandé mécaniquement dans un plan de retombée, par l'intermédiaire d'un premier composant d'actionnement (47), tel qu'en particulier la pédale de frein (1) ou un composant (36 ; 21) articulé sur la pédale de frein (1), et un second composant d'actionnement (37) monté en aval dans le flux des forces, tel qu'en particulier un organe d'entrée (5) du servofrein (6), et en mode by-wire une course à vide (a), pour le découplage mécanique du premier composant d'actionnement (47) par rapport aux rétroactions des forces du système de frein de véhicule automobile, étant prévue entre le premier composant d'actionnement (47) et le second composant d'actionnement (37), **caractérisé en ce qu'**un capteur de course (17) est prévu dans le servofrein (6) et un capteur de pression hydraulique (18) dans un circuit de frein, lesquels détectent des écarts par rapport à des valeurs de consigne, et **en ce que** l'unité électronique (4) reconnaît, sur la base d'écarts suffisants constatés, une fonction de défaut du système de frein et déclenche le plan de retombée.

2. Dispositif d'actionnement de frein by-wire selon la revendication 1, **caractérisé en ce que** le servofrein (6) comporte un capteur de pression pneumatique ou un capteur de pression différentielle.

3. Dispositif d'actionnement de frein by-wire selon la revendication 1 ou 2, **caractérisé en ce qu'**il est prévu un moyen (38) pour réduire automatiquement la course à vide (a) après un mode by-wire au début d'un actionnement du frein occasionné par une force musculaire.

4. Dispositif d'actionnement de frein by-wire selon la revendication 3, **caractérisé en ce que** le moyen (38) est commandé au moyen d'un actionneur (39) électrique, électromagnétique, hydraulique ou pneumatique, qui parvient automatiquement dans une position de fermeture, dans le plan de retombée, pour réduire la course à vide (a).

5. Dispositif d'actionnement de frein by-wire selon la revendication 4, **caractérisé en ce que** le moyen (38) comporte un corps (40) en forme de bloc qui ponte par complémentarité de formes la course à vide (a) entre les composants d'actionnement (47, 37).

6. Dispositif d'actionnement de frein by-wire selon la revendication 5, **caractérisé en ce que** l'actionneur (39) comporte un ressort (41) pour la précontrainte élastique du corps (40) en forme de bloc ainsi qu'un électro-aimant (42) pour replacer ou retenir le corps (40) en forme de bloc dans la position d'ouverture.

7. Dispositif d'actionnement de frein by-wire selon la revendication 1, **caractérisé en ce que** la source de pression comprend un servofrein hydraulique avec au moins une pompe hydraulique (53) qui, en mode by-wire, peut être commandé par des signaux électriques, et **en ce que** l'actionnement dans le plan de retombée s'effectue hydrauliquement à travers le cylindre principal de frein (11).

8. Dispositif d'actionnement de frein by-wire selon la revendication 7, **caractérisé en ce que** la pompe (53) alimente un accumulateur haute pression (54).

9. Dispositif d'actionnement de frein by-wire selon la revendication 1 ou 2, **caractérisé en ce que** la source de pression comprend un servofrein pneumatique (6) qui, en mode by-wire, peut être commandé par des signaux électriques et dans le plan de retombée mécaniquement par les composants d'actionnement (47, 37).

10. Dispositif d'actionnement de frein by-wire selon la revendication 9, **caractérisé en ce que** la source de pression comporte un servofrein pneumatique (6) et en supplément une pompe hydraulique qui est commandée, par exemple en cas de défaut du servofrein pneumatique (6) ou lorsque l'amplification n'est pas suffisante.

11. Dispositif d'actionnement de frein by-wire selon la revendication 10, **caractérisé en ce que** le capteur de distance (17) et/ou un capteur de pression/capteur de pression différentielle reconnaît un point de commande du servofrein (6) et **en ce que** la pompe hydraulique est démarrée à travers l'unité électronique (4).

12. Dispositif d'actionnement de frein by-wire selon la revendication 1, **caractérisé en ce que** le simulateur (2) comporte un moteur (19) ou un ressort (28) qui sert à produire des forces de rétroaction.
